Europäisches Patentamt

European Patent Office

Office européen des brevets

(11) Publication number: 0 263 932 B1

# EUROPEAN PATENT SPECIFICATION

(45) Date of publication of patent specification: **15.07.92** (51) Int. Cl.⁵: **G11B 33/14**, G11B 25/04

(21) Application number: **87111113.4**

(22) Date of filing: **31.07.87**

(54) **Disk file including a filtration system.**

(30) Priority: **14.10.86 US 918183**

(43) Date of publication of application:
**20.04.88 Bulletin 88/16**

(45) Publication of the grant of the patent:
**15.07.92 Bulletin 92/29**

(84) Designated Contracting States:
**DE FR GB**

(56) References cited:
EP-A- 0 095 558
EP-A- 0 153 461
GB-A- 2 166 586
US-A- 4 292 656
US-A- 4 396 964

I.B.M. Technical Disclosure Bulletin vol. 29,
no. 3, August 1986, New York, U.S.A. page
1258 - 1261; "Airflow system for disk drive"

PATENT ABSTRACTS OF JAPAN vol. 9, no.
161 (P-370) 1884 05 July 1985, & JP-A-60
38762

PATENT ABSTRACTS OF JAPAN vol. 9, no.
120 (P-358) 1843 24 May 1985, & JP-A-60 5490

I.B.M. Technical Disclosure Bulletin vol. 26,
no. 11, April 1984, New York, U.S.A. page
6001 - 6002; DAVIS et al.: "Spindle seal for
self-pressurised head/disk assembly"

(73) Proprietor: **International Business Machines
Corporation
Old Orchard Road
Armonk, N.Y. 10504(US)**

(72) Inventor: **Dushkes, Sherman Zigmund
1102 Crompton Road
Redwood City California 94061(US)**
Inventor: **Lieu, Dennis Kenmon
1769 Cape Aston Court
San Jose California 95133(US)**

(74) Representative: **Moss, Robert Douglas
IBM United Kingdom Limited Intellectual
Property Department Hursley Park
Winchester Hampshire SO21 2JN(GB)**

## Description

This invention relates to a disk file including a filtration system, and in particular to a filter for preventing contaminants from entering the sealed disk enclosure through the disk file spindle.

Conventional magnetic recording disk files have one or more rotatable data disks which are accessed by read/write heads which are supported on a thin cushion of air between the heads which are supported on a thin cushion of air between the heads and the rotating disks. The disks are mounted for rotation on a spindle, which includes a rotatable shaft, a bearing assembly supporting the shaft to the disk file frame, and a hub located at the end of the shaft. Because of the extremely low flying height of the heads, particulate matter entering the head/disk area can cause the heads to crash, thereby damaging the heads and disks.

Certain disk files operate as a generally sealed enclosure, as contrasted with those disk files which force filtered outside air at a relatively high flow rate through the head/disk area. In these sealed disk filed, the rotating disks serve as the air pump to continually recirculate air within the generally sealed enclosure. A make-up filter is required to permit air to enter the sealed enclosure at an extremely low flow rate, since some air does escape from the enclosure during normal operation. Air may also enter the enclosure through the spindle bearings since the pumping action of the disks generates a low-pressure area near the hub at the end of the spindle. The spindle bearings are a primary source of contaminants.

One approach to preventing particulate matter from passing the spindle bearings into the head/disk area is to use conventional types of seals. These include ferrofluidic and labyrinth seals. Ferrofluidic seals are costly and difficult to assemble and repair. Labyrinth seals merely provide a flow impedance for air flowing past the bearings and do not filter out small particulate matter.

An alternative approach is disclosed in an article entitled "Spindle Seal for Self-Pressurised Head/Disk Assembly" (IBM Technical Disclosure Bulletin, Vol 26, No 11, April 1984, pp 6001-6002). This gives a solution which involves pressurising the region between the uppermost bearing and the main disk enclosure with filtered air, such that air flow through or past the bearings is in a direction away from the disk enclosure. This technique has two main disadvantages: one is that an external air pump is required since the pumping action of the rotating disks cannot readily be utilised in such an arrangement, and the other is that the frame casting is cumbersome in the bearing region since it is necessary to provide a dedicated air flow path from the external pump to the region between the bearings and the main disk enclosure.

An earlier article "Air Circulation System" (IBM Technical Disclosure Bulletin, Vol 2A, No 11B, April 1982, p 6198), discloses another technique which instead of increasing the air pressure between the bearings and the disk enclosure, relies on reducing the air pressure on the other side of the bearing nearest the disk enclosure, so that air is sucked out of the disk enclosure via this bearing. This technique also requires an external air pump and has the further disadvantage that it tends to reduce the air pressure in the disk enclosure below atmospheric pressure: ideally the air pressure in the disk enclosure should be above atmospheric pressure so that air flows out of the disk enclosure along any leakage paths present, thereby preventing the ingress of contaminants along these leakage paths.

JP-A-60-5490 (Patent abstracts of Japan, Vol 9, No. 120, p358) discloses a magnetic disk device in which the spindle bearings are used to prevent fluid from a magnetic seal being scattered into the disk enclosure. There is also a labyrinth seal between the bearing and the disk surfaces.

In order to overcome the disadvantages of the prior art, the invention provides a magnetic disk recording device including a filtration system, the device comprising: a substantially sealed disk enclosure containing at least one disk for information storage, information retrieval means for extracting information from the disk, and means for mounting the disk on a shaft; and bearing means for rotatably mounting the shaft and the disk relative to a support frame; said device being characterised by further comprising filtration means disposed around the shaft between the bearing means and the means for mounting the disk on the shaft, said filtration means being attached to the support means and extending sufficiently close to the shaft that most air flowing from the bearing means towards the means for mounting the disk to the shaft passes through said filtration means. Thus the filtration means can trap contamination shed by the bearing means.

Preferably the bearing means is not sealed from the atmosphere surrounding the disk enclosure, such that replacement air to replace air leaking from the disk enclosure can enter the disk enclosure via the bearing means and the filtration means, whereby the filtration means traps contamination borne by the replacement air in addition to that shed by the bearing means. This allows the filtration means to serve as a make-up filter to replace air lost through leakage paths and air needed to pressurise the disk enclosure on start-up. This avoids the expense of providing a separate make-up filter.

Preferably the filtration means comprises a support ring adapted to support and retain a ring of filter material, the support ring and the ring of filter material each being disposed around a portion of the shaft, the support ring having a plurality of axially directed openings whereby air may flow from the bearing means to the disk enclosure via the openings and the ring of filter material and, further, the inner circumference of said support ring is located in close proximity to the outer surface of the shaft. This provides good airflow through the filter material since the gap between the support ring and the shaft is small so little air flows around the side of the filtration means. This is desirable since the amount of contamination reaching the disk enclosure is reduced as the proportion of air passing through rather than around the filtration means increases. This proportion is further increased if there is provided additional means for directing air flowing from the bearing means to the disk enclosure through the filtration means.

Fig. 1 is a sectional view of a portion of a disk file according to the invention;

Fig. 2 is an enlarged view of a portion of the disk file of Fig. 1, showing the arrangement of components in the area of the filtration means; and

Fig. 3 is an exploded isometric view of the filtration means.

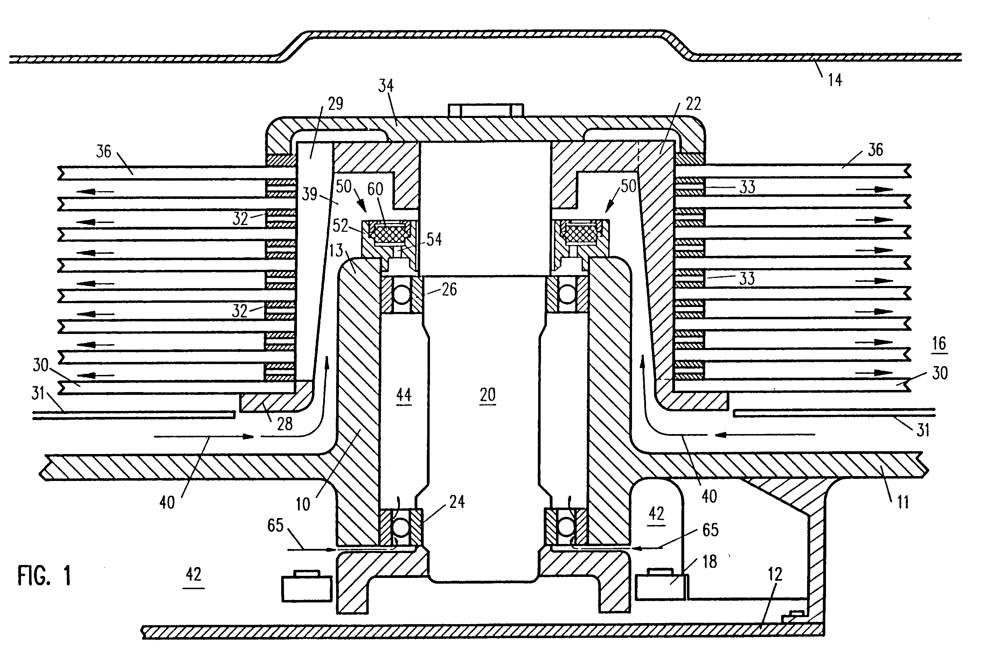

A cross-section of a portion of the disk file incorporating the present invention is illustrated in Fig. 1. The disk file includes a frame 10 having a base plate 11 and a cylindrical portion 13. A compartment cover 12 and an end cover 14 are attached to frame 10. The region depicted as 16, and located generally between cover 14 and base plate 11, is the generally sealed head-disk area which contains the magnetic disk and read/write heads.

A spindle drive motor 18 drives a rotary shaft 20 which has a hub 22 attached to its end opposite motor 18. The shaft 20 is attached to portion 13 of frame 10 by axially-spaced bearings 24, 26.

The hub 22 has a lower rim 28 which supports the lowermost disk 30 in the stack of magnetic recording disks. Each of the disks on hub 22 is separated from adjacent disks by means of disk spacers 32. An axial load is applied to all of the disks in the disk stack by means of a disk clamp 34 which is attached to the end of the shaft 20.

The hub 22 has a plurality of circumferentially-spaced and axially-directed slots 29 which provide means for the passage of air from the region 39 between hub 22 and frame portion 13 to the disk spacers 32. The slots 29 in the hub communicate with circumferentially-spaced openings 33 in the disk spacers 32. In operation of the disk file, the rotating disks serve as the means for pumping the air which is generally confined within the head-disk area 16. The air is circulated in the direction shown by arrow 40 from below the baffle 31 which is located below the lowermost disk 30, up between hub 22 and frame portion 13, and out through the slots 29 in hub 22 and openings 33 in disk spacers 32. A filter (not shown) is typically located in the disk file for filtering any particles flowing within the area 16.

In certain disk files, the region 42 where the spindle motor 18 is located, ie between base plate 11 and compartment cover 12, is not part of the sealed enclosure but is generally open to the atmosphere. Because the bearings 24, 26 do not provide an air-tight seal, during operation of the disk file the generally low-pressure area in region 39 causes air to flow from the atmosphere past bearing 24 and into the region 44 between shaft 20 and frame portion 13. The filtering means 50 shown in Fig. 1 between bearing 26 and region 39 acts to substantially seal the motor 18 and the spindle bearings from the head/disk area 16 and to filter any particulate matter which would otherwise pass into region 39.

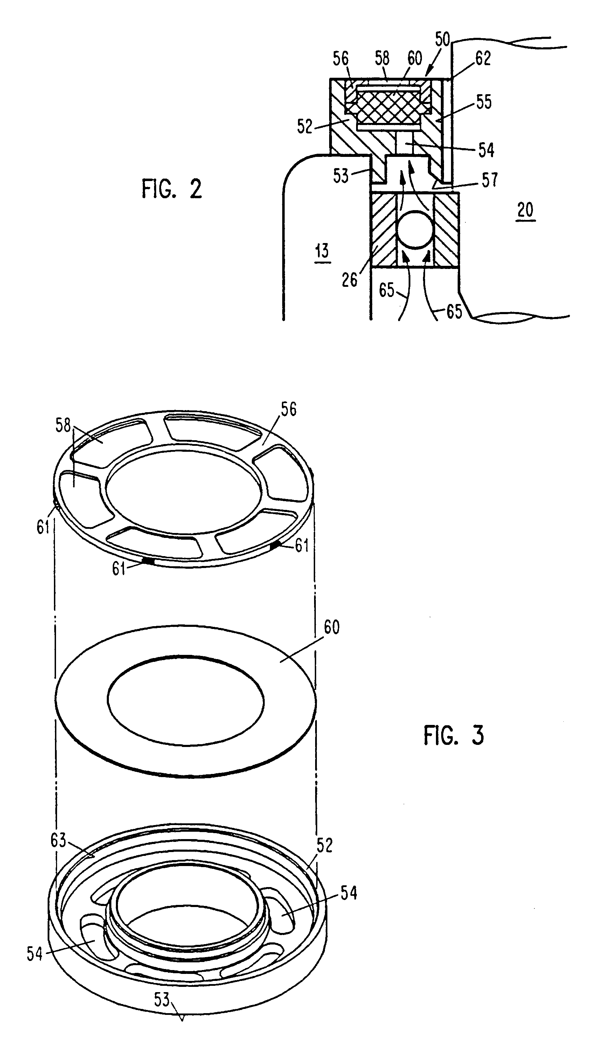

The filtering means 50, as shown in better detail in the enlarged view of Fig. 2, includes a lower ring 52 having axially-directed openings 54, an upper ring 56 with axially-directed openings 58, and annular filter material 60 located between rings 52 and 56. The lower ring 52 has a wall 53 which provides an interference fit with frame portion 13 and a wall 55 which, together with the outer surface of shaft 20, defines an annular gap 62 between the filtering means 50 and the shaft 20. The ring 52 also includes an annular sloped face 57 which slopes toward openings 54 and thus directs the flow of air into openings 54.

The three components forming the filtering means 50 are shown in isometric view of Fig. 3. The first or lower ring 52 has a plurality of circularly-spaced slots which are the axially-directed openings 54 for the flow of air from the spindle bearings. An annular sheet of filter material 60, such as conventional glass fibre material available Cambridge Filter Corporation or Filtrete brand filter material from 3M Corporation, seated within the ring 52 over the openings 54. The second or top ring 56 has a like plurality of circularly-spaced, axially-directed openings 58 and is placed over filter material 60 into alignment with lower ring 52. The lower ring 52 is preferably formed of stainless steel and the upper ring 56 is preferably formed of a plastic material, such as polycarbonate. The two rings are held together to retain filter material 60 between them by means of the tabs 61 on ring 56 which snap into the inner lip 63 on ring 52.

Referring again to Fig. 1, when the disk first begin rotating, a pressure less than atmospheric occurs in region 39 by virtue of the pumping action of the rotating disks. Since the bearings 24, 26 do not provide a perfect seal, atmospheric air enters into the region 44, in the direction indicated by arrow 65, past bearing 24. This air flow carries with it particulate matter, such as bearing grease and other contaminants, which could cause damage to the heads or disks. However, after this contaminated air passes bearing 26, where further contamination can also occur, a substantial portion if it is directed through openings 54 in ring 52, through filter material 60, and out openings 58 in top ring 56. An insubstantial portion, typically less than 1%, of the air from region 44 is directed through the annular gap 62 between shaft 20 and the filtering means 50. Thus, with the use of the filtering means 50 in those disk files in which the motor 18 is not within a sealed enclosure, it is not necessary to use a separate make-up filter since the filtering means 50 serves this function. However, in those disk files in which the region 42 surrounding motor 18 is substantially sealed chamber, a separate make-up filter in base plate 11 is provided to communicate between region 16 and the atmosphere. In that instance, the filtering means 50 functions in the same manner, the primary difference being that air flow passes through the spindle bearings generally only at start-up of the disk file, since after start-up there is generally pressure equalisation between regions 39 and 42, with the primary air flow being through the make-up filter.

## Claims

1. A magnetic disk recording device including a filtration system, the device comprising:

   a substantially sealed disk enclosure (16) containing at least one disk (30) for information storage, information retrieval means for extracting information from the disk, and means (22, 34) for mounting the disk on a shaft (20);

   and bearing means (24, 26) for rotatably mounting the shaft and the disk relative to a support frame (10);

   said device being characterised by further comprising filtration means (50) disposed around the shaft between the bearing means (24, 26) and the mean (22, 34) for mounting the disk on the shaft (20), said filtration means being attached to the support means and extending sufficiently close to the shaft that most air flowing from the bearing means towards the mean (22, 34) for mounting the disk to the shaft passes through said filtration means (50).

2. A device as claimed in claim 1, wherein the shaft on the filtration means side of the bearings is inside the disk enclosure, and the shaft on the opposite side of the bearings is outside the disk enclosure, so that make-up air can enter the disk enclosure from outside via the bearing means and the filtration means (50).

3. A device as claimed in claim 1 or claim 2, further characterised in that the filtration means (50) comprises a support ring (52, 56) adapted to support and retain a ring of filter material (60), the support ring and the ring of filter material each being disposed around a portion of the shaft (20), the support ring having a plurality of axially directed openings (54, 58) for air passage.

4. A device as claimed in claim 3 further characterised in that the inner circumference of said support ring (52,56) is located in close proximity to the outer surface of the shaft (20).

5. A device as claimed in claim 3 or claim 4 further characterised in that the support ring (52, 56) is fabricated as two parts, one part (56) being arranged to interlock with other part (52), both parts being arranged to clamp the ring of filter material (60) between them and to provide said plurality of openings (59, 58), and both parts of the support ring being in the shape of a ring.

6. A device as claimed in claim 3, claim 4 or claim 5 further characterised in that the support ring (52, 56) has an annularly sloped face (57) for directing air flowing from the bearing means (24, 26) into the filtration means (50).

## Revendications

1. Dispositif d'enregistrement à disque magnétique comportant un système de filtrage, le dispositif comprenant :

   une enceinte sensiblement fermée de chargement de disque (16) qui contient au moins un disque (30) pour le stockage d'informations, des moyens de récupération des informations pour extraire des informations du disque, et des moyens (22,34) pour monter le disque sur un arbre (20) ;

   et des moyens de portée ou paliers (24,26) pour monter de façon tournante l'arbre et le disque par rapport à un bâti support (10) ;

   ledit dispositif étant caractérisé en ce qu'il comprend en outre des moyens de filtrage (50) disposés autour de l'arbre entre les paliers (24,26) et les moyens (22,34) de montage du disque sur l'arbre (20), lesdits moyens de filtrage étant fixés au support et s'étendant suffisamment près de l'arbre pour que la plus grande partie de l'air qui circule des paliers vers les moyens (22,34) de montage du disque sur l'arbre traverse lesdits moyens de filtrage (50).

2. Dispositif suivant la revendication 1, dans lequel l'arbre, du côté moyens de filtrage des paliers, est à l'intérieur de l'enceinte de disque, et l'arbre, du côté opposé des paliers, est à l'extérieur de l'enceinte de disque, de sorte que l'air d'appoint peut pénétrer dans l'enceinte de disque, à partir de l'extérieur, à travers les paliers et les moyens de filtrage (50).

3. Dispositif suivant la revendication 1 ou la revendication 2, caractérisé en outre en ce que les moyens de filtrage (50) comprennent un anneau support (52, 56) prévu pour supporter et retenir un anneau de matière filtrante (60), l'anneau support et l'anneau de matière filtrante étant disposés chacun autour d'une partie de l'arbre (20), l'anneau support comportant une pluralité d'ouvertures dirigées axialement (54, 58) pour le passage d'air.

4. Dispositif suivant la revendication 3, caractérisé en outre en ce que la circonférence intérieure dudit anneau support (52, 56) est située très près de la surface extérieure de l'arbre (20).

5. Dispositif suivant la revendication 3 ou la revendication 4, caractérisé en outre en ce que l'anneau support (52, 56) est fabriqué sous la forme de deux parties, une partie (56) étant conçue pour se verrouiller avec l'autre (52) et les deux parties étant prévues pour bloquer entre elles l'anneau de matière filtrante (60) et définir ladite pluralité d'ouvertures (59, 58), les deux parties de l'anneau support ayant la forme d'un anneau.

6. Dispositif suivant la revendication 3, la revendication 4 ou la revendication 5, caractérisé en outre en ce que l'anneau support (52) présente une face annulairement inclinée (57) pour diriger l'air venant des paliers (24, 26) vers les moyens de filtrage (50).

**Patentansprüche**

1. Einrichtung zum Aufzeichnen auf Magnetplatten mit einem Filterungssystem, wobei die Einrichtung folgendes aufweist:
ein im wesentlichen abgedichtetes Plattengehäuse (16), das folgendes einschließt: zumindest eine Platte (30) für Informationsspeicherung, Informationswiedergewinnungsmittel zum Extrahieren von Informationen aus der Platte und Mittel (22, 34) zum Anbringen der Platte auf einer Welle (20),
und Lagermittel (24, 26) zum drehbaren Anbringen der Welle und der Platte bezüglich eines Trägerrahmens (10),
wobei die Einrichtung dadurch gekennzeichnet ist, daß sie ferner ein Filterungsmittel (50) aufweist, das um die Welle herum zwischen den Lagermitteln (24, 26) und den Mitteln (22, 34) zum Anbringen der Platte auf der Welle (20) angeordnet ist, wobei das Filterungsmittel mit den Trägermitteln verbunden ist und sich hinreichend nahe der Welle erstreckt, sodaß der größte Teil der aus den Lagermitteln zu den Mitteln (22, 34) zum Anbringen der Platte auf der Welle hin strömenden Luft durch das Filterungsmittel (50) strömt.

2. Einrichtung nach Anspruch 1, bei welcher sich die Welle auf der Filterungsmittelseite der Lager innerhalb des Plattengehäuses befindet und sich die Welle auf der gegenüberliegenden Seite der Lager außerhalb des Plattengehäuses befindet, sodaß die Auffrischungsluft von außen über die Lagermittel und das Filterungsmittel (50) in das Plattengehäuse eintreten kann.

3. Einrichtung nach Anspruch 1 oder Anspruch 2, ferner dadurch gekennzeichnet, daß das Filterungsmittel (50) einen Trägerring (52, 56) aufweist, der angepaßt ist, um einen Ring aus einem Filtermaterial (60) zu tragen und festzuhalten, wobei sowohl der Trägerring als auch der Ring aus einem Filtermaterial um einen Teil der Welle (20) herum angeordnet ist und der Trägerring eine Mehrzahl axial gerichteter Öffnungen (54, 58) für einen Luftdurchtritt aufweist.

4. Einrichtung nach Anspruch 3, ferner dadurch gekennzeichnet, daß der innere Umfang des Trägerrings (52, 56) in unmittelbarer Nähe zu der äußeren Oberfläche der Welle (20) gelegen ist.

5. Einrichtung nach Anspruch 3 oder Anspruch 4, ferner dadurch gekennzeichnet, daß der Trägerring (52, 56) in zwei Teilen hergestellt ist, wobei ein Teil (56) angeordnet ist, um sich mit dem anderen Teil (52) zu verriegeln, beide Teile angeordnet sind, um den Ring aus einem Filtermaterial (60) zwischen ihnen festzuklemmen und um die Mehrzahl von Öffnungen (59, 58) bereitzustellen und beide Teile des Trägerrings der Form nach ein Ring sind.

6. Einrichtung nach Anspruch 3, Anspruch 4 oder Anspruch 5, ferner dadurch gekennzeichnet, daß der Trägerring (52, 56) eine Fläche (57) mit ringförmiger Schräge aufweist, um die aus den Lagermitteln (24, 26) strömende Luft in das Filterungsmittel (50) zu lenken.

FIG. 1

EP 0 263 932 B1

FIG. 2

FIG. 3